# EUROPEAN PATENT APPLICATION

(11) **EP 3 115 442 A1**
(43) Date of publication of application: **11.01.2017**
(21) Application number: 14884947.4
(22) Date of filing: 05.03.2014
(51) Int. Cl.: C10J 3/78, B01J 3/02, B09B 3/00

(54) **GASIFICATION SYSTEM**

(71) Applicant: The Chugoku Electric Power Co., Inc., Hiroshima-shi, Hiroshima 730-8701 (JP); Hiroshima University, Higashi-Hiroshima-shi Hiroshima 739-8511 (JP); Toyo Koatsu Co., Ltd., Hiroshima 733-0022 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP); MATSUMURA, Yukihiko, Higashihiroshima-shi Hiroshima 739-8511 (JP); KAWAI, Yoshifumi, Hiroshima-shi Hiroshima 734-0001 (JP); NOGUCHI, Takashi, Hiroshima-shi Hiroshima 733-0002 (JP)
(74) Representative: Osha Liang
(86) International application number: PCT/JP2014/055692
(87) International publication number: WO 2015/132919

(57) **Abstract**

An object of the present invention is to enhance heat exchange efficiency in a heat exchanger and to gasify a gasification feedstock efficiently.

A gasification system 100 including a countercurrent type heat exchanger 30 configured to include a low-temperature side flow channel 36 through which a gasification feedstock flows, and a high-temperature side flow channel 37 to which treated water in a supercritical state is introduced, the treated water raising a temperature of the gasification feedstock, a gasification reactor 50 configured to gasify the gasification feedstock, whose temperature has been raised by the countercurrent type heat exchanger 30, by heating and pressurizing the gasification feedstock to be in a supercritical state, the gasification reactor 50 being configured to discharge the gasification feedstock as treated water in the supercritical state, and a treated water flow channel 55 configured to introduce, to the countercurrent type heat exchanger 30, the treated water that has been discharged from the gasification reactor 50, the gasification feedstock being introduced to the low-temperature side flow channel 36, the gasification system including an external heating means 35 configured to extract the introduced gasification feedstock from the middle of the low-temperature side flow channel 36, heat the extracted gasification feedstock, and return the heated gasification feedstock to a middle position on a feedstock downstream side of the extracted position.

## Description

### [Technical Field]

The invention relates to a gasification system for gasifying gasification feedstocks such as biomass by using a heat exchanger.

### [Background Art]

As a system for gasifying feedstocks such as biomass (Shochu (distilled liquor) residue, egg-laying hen droppings and the like) by using a heat exchanger, Patent Literatures 1 and 2 disclose techniques that raise the temperature of water-containing biomass by exchanging heat with supercritical water in a double-pipe heat exchanger and gasify the biomass by heating the biomass by a predetermined reactor and burner.

### [Citation List]

### [Patent Literature]

PTL 1: Japanese Patent No. 4719864
PTL 2: Japanese Patent No. 4997546

### [Summary of the Invention]

### [Technical Problem]

In each of heat exchangers of Patent Literatures 1 and 2, the temperature of a suspension including biomass is raised from room temperature to a high temperature of, for example, about 400°C. Further, an internal pressure of the heat exchanger is high such as 25 MPa at this time.

However, in such a high-temperature and high pressure, specific heat at constant pressure of water (suspension) becomes large, and thus heat exchange efficiency in the heat exchanger is deteriorated. For this reason, there was a case where the efficiency of gasification was deteriorated.

The present invention has been made in view of the above issue, and an object thereof is to provide a gasification system that improves the heat exchange efficiency in the heat exchanger and thus gasifies a gasification feedstock efficiently.

### [Solution to Problem]

In order to achieve the above object, the present invention is a gasification system including a countercurrent type heat exchanger configured to include a low-temperature side flow channel through which a gasification feedstock flows, and a high-temperature side flow channel to which treated water in a supercritical state is introduced, the treated water raising a temperature of the gasification feedstock by exchanging heat with the gasification feedstock, a gasification reactor configured to gasify the gasification feedstock, whose temperature has been raised by the countercurrent type heat exchanger, by heating and pressurizing the gasification feedstock to be in a supercritical state, the gasification reactor being configured to discharge the gasification feedstock as treated water in the supercritical state, and a treated water flow channel configured to introduce, to the countercurrent type heat exchanger, the treated water that has been discharged from the gasification reactor, the gasification system including: a feedstock introducing means configured to introduce the gasification feedstock to the low-temperature side flow channel; and an external heating means configured to extract, from the middle of the low-temperature side flow channel, the gasification feedstock that has been introduced by the feedstock introducing means, heat the extracted gasification feedstock, and return the heated gasification feedstock to a middle position on a feedstock downstream side of a position in which the gasification feedstock has been extracted.

According to the present invention, the gasification feedstock that has been introduced to the heat exchanger is extracted in the middle of the low-temperature side flow channel, and the extracted gasification feedstock is heated and returned to the feedstock downstream side in the low-temperature side flow channel, thereby it is possible to prevent the gasification feedstock from flowing through the point, for example, in which the heat exchange efficiency deteriorates. This can enhance the heat exchange efficiency in the heat exchanger. Further, the gasification feedstock can be gasified efficiently by heating the gasification feedstock by the external heating means which is provided outside the heat exchanger.

In another aspect of the present invention, a position in which the extraction is performed is determined based on a value of specific heat at constant pressure of the gasification feedstock, and the gasification feedstock is extracted from the position that has been determined.

According to the present invention, since the position in which the extraction is performed is determined based on the specific heat at constant pressure, for example, the gasification feedstock is extracted from a position in which a value of the specific heat at constant pressure is low in the heat exchanger, and thus the heat exchange efficiency can be certainly enhanced.

In another aspect of the present invention, the low-temperature side flow channel is configured to include a low-temperature zone in which a temperature of the gasification feedstock introduced by the gasification feedstock introducing means is raised, and a high-temperature zone in which a temperature of the gasification feedstock that has passed through the low-temperature zone is raised again, and the external heating means extracts the gasification feedstock from a high temperature end of the low-temperature zone and returns the gasification feedstock to a low temperature end of the high-temperature zone.

As in the present invention, the gasification feedstock is extracted from the high temperature end of the low-temperature zone, and the extracted gasification feedstock is returned to the low temperature end of the high-temperature zone, so that the temperature of the gasification feedstock can be certainly raised without allowing the gasification feedstock to flow through a temperature zone in which the heat exchange efficiency is low. This can perform gasification efficiently.

It should be noted that, the specific heat at constant pressure of the gasification feedstock at the position in which the extraction is performed is, for example, 10kJ/kg·K or greater.

In another aspect of the present invention, heating by the external heating means is performed in a preheater that preheats the gasification feedstock whose temperature has been raised by the countercurrent type heat exchanger.

According to the present invention, the heating of the gasification feedstock that has been extracted from the countercurrent type heat exchanger is performed by the preheater, and thus energy to be generated in the gasification system can be used efficiently.

### [Effects of the Invention]

According to the present invention, a gasification system can be provided in which the heat exchange efficiency in the heat exchanger can be enhanced, and thus the gasification feedstock is gasified efficiently.

### [BRIEF DESCRIPTION OF DRAWINGS]

[FIG. 1A] FIG. 1A is a diagram showing a schematic configuration of a biomass gasification system 100 with supercritical water.
[FIG. 1B] FIG. 1B a diagram illustrating an example of a double-pipe configuration in a heat exchanger 30.
[FIG. 2] FIG. 2 is a diagram showing the heat exchanger 30 in a case in which the length of a double-pipe from an introduction port 31 to a discharge port 32 of a gasification feedstock is set to 100.
[FIG. 3] FIG. 3 is a diagram showing an example of changes in temperature ("tube temperature") of the gasification feedstock that flows through a low-temperature side flow channel 36 and changes in temperature ("jacket temperature") of treated water that flows through a high-temperature side flow channel 37.
[FIG. 4] FIG. 4 is a diagram showing a relationship among temperature, pressure, and specific heat at constant pressure.
[FIG. 5] FIG. 5 is an example of the heat exchanger 30 configured so that a medium-temperature zone 72 does not exist.
[FIG. 6] FIG. 6 is a diagram illustrating appropriate positions for an extracting position 33 and a return position 34 in the heat exchanger 30.
[FIG. 7] FIG. 7 is a diagram showing a relationship among temperature, pressure, and specific heat at constant pressure.

### [Description of Embodiments]

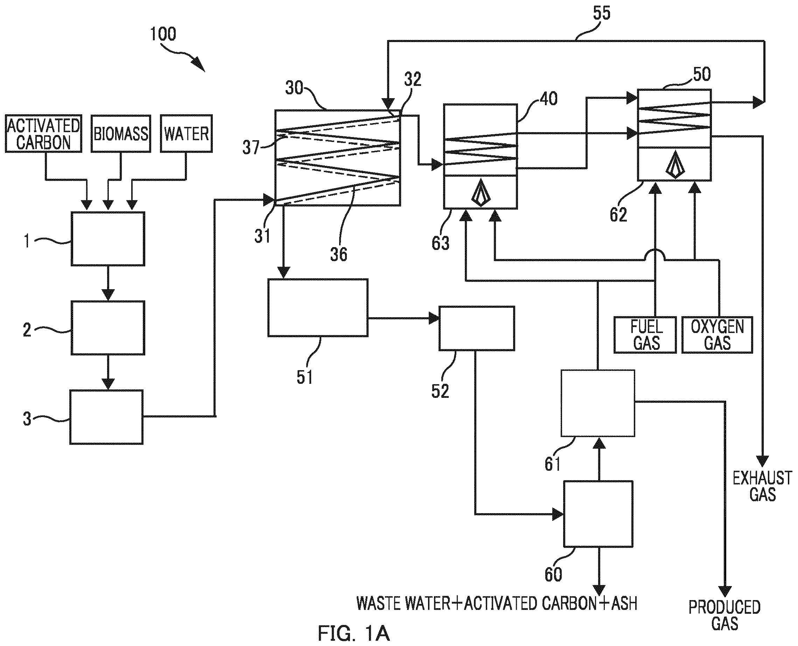

FIG. 1A is a diagram showing a schematic configuration of a biomass gasification system 100 with supercritical water, which is described as one embodiment of the present invention. As illustrated in FIG. 1A, the gasification system 100 includes an regulation tank 1, a crusher 2, a supply pump 3, a heat exchanger 30, a preheater 40, a gasification reactor 50, a cooler 51, a pressure reducer 52, a gas-liquid separator 60, a gas tank 61 or the like. The heat exchanger 30 and the gasification reactor are connected by piping 55.

The regulation tank 1 is a tank for mixing biomass, water and activated carbon, while regulating a mixing amount of water and activated carbon in accordance with such as types, amount, and water content of biomass. In the regulation tank 1, a gasification feedstock (suspension) is prepared by mixing biomass, activated carbon and water. Note that, the above-mentioned biomass is water-containing biomass, for example, Shochu residue, egg-laying hen droppings or the like. Further, other non-metal catalysts may be mixed instead of the activated carbon, for example, zeolite may be used, and a mixture thereof may also be used. Note that, powder with an average particle size of 200µm or less is preferably used as a non-metal catalyst, and a porous catalyst is further preferable.

The crusher 2 is a device that crushes biomass in the suspension, which has been prepared in the regulation tank 1, into a uniform size in advance (an average particle size is preferably 500µm or less, and more preferably, an average particle size is 300µm or less), and transfers the biomass to the supply pump 3.

The supply pump 3 is a device that supplies the suspension supplied from the crusher 2 to the exchanger 30. The supply pump 3 is, for example, a high pressure pump, Moineau pump and the like.

The heat exchanger 30 is a countercurrent type heat exchanger, and is a device that uses heat of discharged matter (produced gas and ash which are discharged from the gasification reactor 50, a non-metal catalyst and water (supercritical water) or the like), which is discharged from the gasification reactor 50, to raise the temperature of the gasification feedstock (suspension) that is supplied from the supply pump 3. That is, this heat exchanger 30 includes a low-temperature side flow channel 36 and a high-temperature side flow channel 37, through which the gasification feedstock that is supplied from the supply pump 3 flows. Treated water flows through the high-temperature side flow channel 37, in which the treated water raises the temperature of the gasification feedstock by exchanging heat with the gasification feedstock that flows through the low-temperature side flow channel 36.

The above-mentioned discharged matter (treated water) is introduced to the high-temperature side flow channel 37 through the piping 55. Meanwhile, the temperature of the suspension that has been introduced from the introduction port 31 is raised while flowing through the low-temperature side flow channel 36, and the suspension is discharged from the discharge port 32. Note that, the internal pressure of the heat exchanger 30 is set to about 25 MPa.

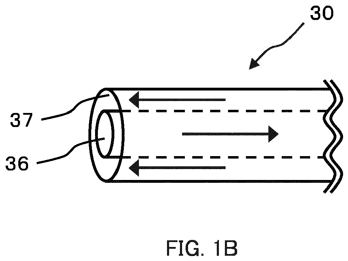

The heat exchanger 30 is, for example, a double-pipe heat exchanger. FIG. 1B is a diagram illustrating an example of a double-pipe configuration in the heat exchanger 30. As illustrated in FIG. 1B, the low-temperature side flow channel 36 is provided as an inner pipe of the double-pipe, and the high-temperature side flow channel 37 is provided as an outer pipe of the double-pipe.

Referring back to FIG. 1A, the preheater 40 is a device that heats the suspension to a predetermined temperature by burning such as produced gas, fuel gas (for example LPG), and oxygen gas which have been accumulated in the gas tank 61.

The gasification reactor 50 is, for example, a tubular reactor, a fluidized-bed reactor or the like, and is a device for gasifying biomass in a suspension with supercritical water. This gasification uses the above-stated non-metal catalyst and is performed at a temperature and under a pressure (for example, 600°C or greater, within 25 to 35 Mpa) which can enhance reaction efficiency. By treating biomass with supercritical water in this way, the biomass can be decomposed to produce gases such as hydrogen gas, methane, ethane, and ethylene.

The cooler 51 is a device for cooling the discharged matter that is discharged from the gasification reactor 50.

The pressure reducer 52 is a device for reducing the pressure of the produced gas and the like of the discharged matter that is discharged from the gasification reactor 50.

The gas-liquid separator 60 is a device that separates the discharged matter, which is discharged from the gasification reactor 50, into a gas component (produced gas) and a liquid component (ash, activated carbon, and a mixed liquid containing water).

The gas tank 61 is a container (preferably, a pressure resistant container) that accumulates a gas component (produced gas) that is separated by the gas-liquid separator 60.

The heater 62 that is provided in the gasification reactor 50 is a device that burns, in the gas containing oxygen, a part of the produced gas accumulated in the gas tank 61 or fuel gas (for example, LPG and the like) to heat the gasification reactor 50, and thus heats the suspension to a predetermined temperature. Further, the heater 63 provided in the preheater 40 is a device that burns, in the gas containing oxygen, a part of the produced gas accumulated in the gas tank 61 or fuel gas (for example, LPG and the like) to heat the preheater 40, and thus heats the suspension to a predetermined temperature. The heaters 62 and 63 are existing devices, such as a burner, that burn fuel gas for heating.

In such a gasification system 100, water that flows through the high-temperature side flow channel 37 of the heat exchanger 30 is treated water in a supercritical state, which is discharged from the gasification reactor 50, as described above, and the temperature thereof is a high temperature such as at about 600°C. Further, the internal pressure of the heat exchanger 30 is also a high pressure which is 25MPa. In this high-temperature and high-pressure condition, there is a case where a temperature of the gasification feedstock is not sufficiently raised in the heat exchanger 30.

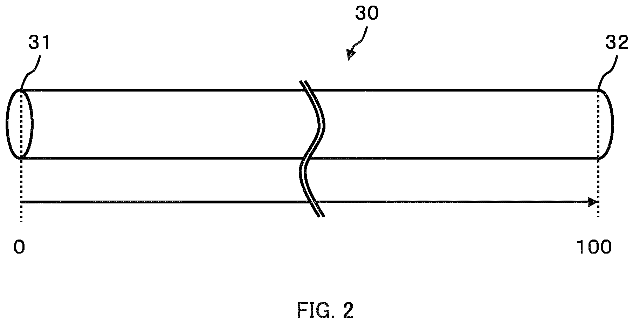

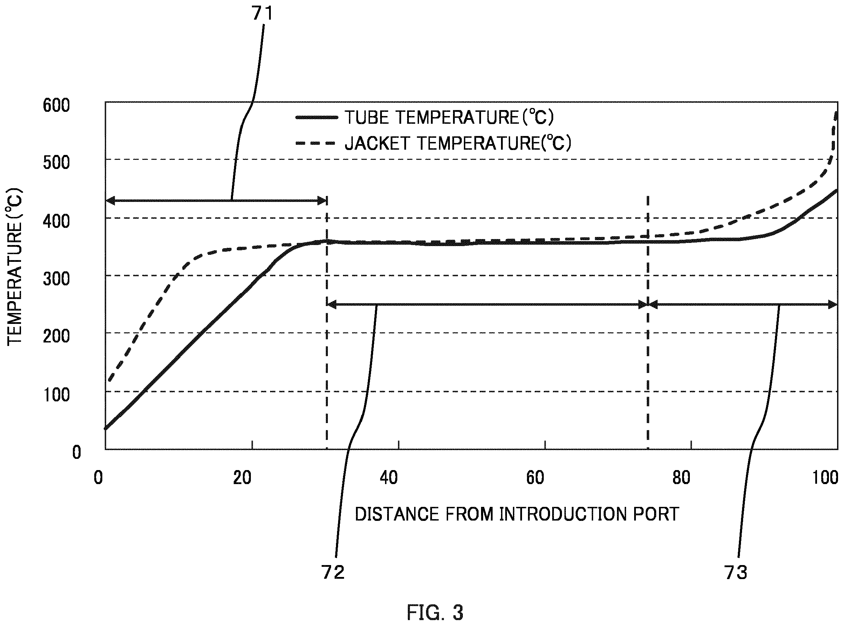

FIG. 3 is a diagram showing an example of changes in temperature ("tube temperature") of the gasification feedstock that flows through the low-temperature side flow channel 36 and changes in temperature ("jacket temperature") of the treated water that flows through the high-temperature side flow channel 37 in using the heat exchanger 30 (see FIG. 2) when the entire length of a double-pipe from the introduction port 31 to the discharge port 32 is set to 100. As illustrated in FIG. 3, when treated water of about 600°C is introduced to the heat exchanger 30, three zones including a low-temperature zone 71, a medium-temperature zone 72 and a high-temperature zone 73 are formed in the heat exchanger 30 in the flowing order of the gasification feedstock (in order closer to the introduction port 31). In other words, in the low-temperature zone 71, the temperature of the gasification feedstock introduced from the introduction port 31 is rapidly raised from about 25°C to about 380°. However, in the medium-temperature zone 72, the temperature of the gasification feedstock remains within a predetermined range and hardly rises (remains at about 380°C). Then, in the high-temperature zone 73, the temperature of the gasification feedstock is raised again and reaches about 400°C rapidly.

Thus, although the temperature of the gasification feedstock is rapidly raised in the low-temperature zone 71 and the high-temperature zone 73, the temperature of the gasification feedstock is hardly raised in the medium-temperature zone 72, and thus the heat exchange treatment in the heat exchanger 30 is inefficient as a whole. The length of the medium-temperature zone 72 exceeds 50 percent of the entire length of the double-pipe of the heat exchanger 30 in some cases, this results in a reduction in the heat exchange efficiency of the heat exchanger 30 especially in those cases.

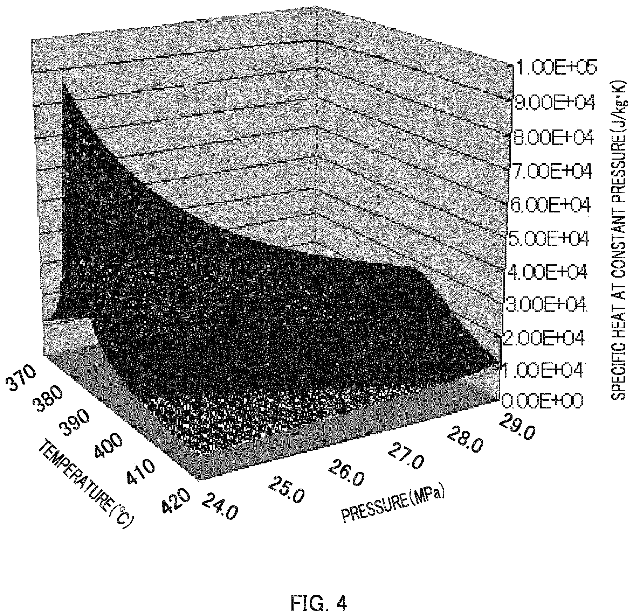

The reasons that the medium-temperature zone 72 exists are as follows. FIG. 4 is a diagram showing a relationship among the temperature of water, pressure and specific heat at constant pressure. As illustrated in FIG. 4, when the internal pressure of the heat exchanger 30 is 25 MPa, the specific heat at constant pressure takes a specifically high value (reaches its peak) at about 380°C, and thus the temperature of the gasification feedstock having such a temperature is not easily raised. Further, also in the treated water that exchanges heat with the gasification feedstock, the specific heat at constant pressure reaches its peak at about 380°C (more precisely, reaches its peak at somewhat lower temperature than the case of the gasification feedstock due to a pressure loss in the double-pipe) as in the case of the gasification feedstock.

Then, the present inventors conceive that, if the heat exchanger 30 is configured so that a zone (a zone in which the temperature of the gasification feedstock is about 380°C in the example described above) in which the temperature of the gasification feedstock is hardly raised does not exist in the heat exchanger 30, in other words, so that the medium-temperature zone 72 does not exist, the heat exchange efficiency in the heat exchanger 30 can be enhanced.

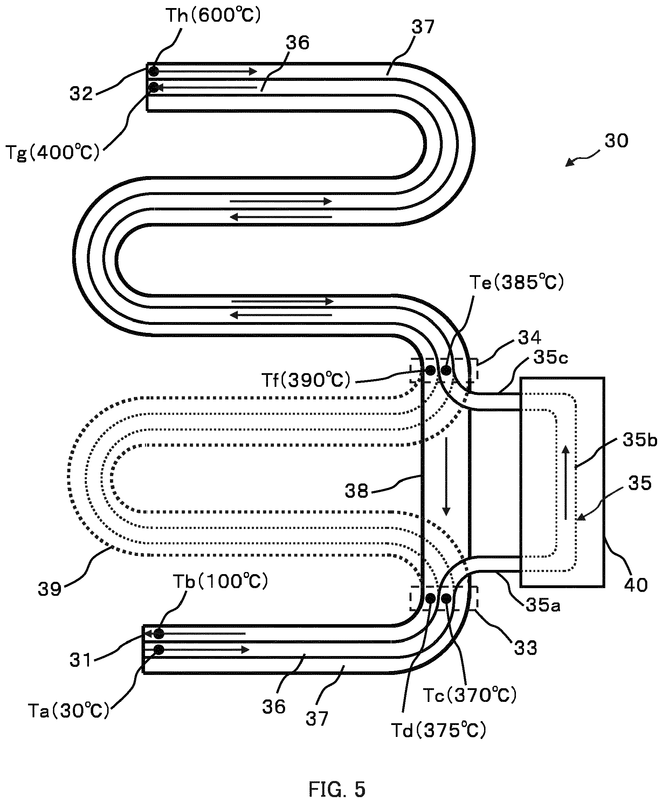

FIG. 5 illustrates one example of the heat exchanger 30 having such a configuration. As illustrated in FIG. 5, an external heating means 35 for heating the gasification feedstock is provided outside the heat exchanger 30. In other words, a flow channel is changed in a manner in which, the gasification feedstock is extracted from a predetermined position 33 (hereinafter, referred to as an extracting position 33) of the low-temperature side flow channel 36 as shown by a reference number 35a, the extracted gasification feedstock is heated by heat of the preheater 40 as shown by a reference number 35b, and the heated gasification feedstock is returned to a predetermined position 34 (hereinafter, referred to as a return position 34) of the low-temperature flow channel 36, which is arranged on a feedstock downstream side of the extracting position 33 as shown by a reference number 35c. This change of the flow channel is performed, for example, by connecting between the extracting position 33 and the preheater 40 with piping so as to allow the gasification feedstock to flow therethrough, and by connecting between the preheater 40 and the return position 34 with piping so as to allow the gasification feedstock to flow therethrough.

Specifically, the extracting position 33 and the return position 34 described above are positions as follows. That is, as illustrated in FIG. 5, the extracting position 33 is a position in which a temperature Tc of the gasification feedstock becomes 370°C, and a temperature Td of the treated water becomes 375°C (that is, a high temperature end of the low-temperature zone 71, and a boundary part with the medium-temperature zone 72). Further, the return position 34 is a position in which a temperature Te of the gasification feedstock becomes 385°C, and a temperature Tf of the treated water becomes 390°C (that is, a low temperature end of the high-temperature zone 73, and a boundary part with the medium-temperature zone 72).

Note that, in response to such a change of the flow channel of the low-temperature side flow channel 36, the flow channel of the high-temperature side flow channel 37 is also changed. That is, as illustrated in FIG. 5, the flow channel is configured so that the extracting position 33 and the return position 34 are connected with bypass piping 38, and the treated water directly flows from the return position 34 to the extracting position 33. Further, a surplus portion 39 of the piping is removed due to the above-mentioned change of the flow channel.

As described above, the extracting position 33 is provided at a boundary part between a low-temperature area 71 and a medium-temperature area 72, and the return position 34 is provided at a boundary part between the medium-temperature area 72 and a high-temperature area 73, so that the heat exchange efficiency in the heat exchanger 30 can be enhanced and the temperature of the gasification feedstock can be certainly raised.

Further, in this way, in the heat exchanger 30, an area does not exist in which the temperature of the gasification feedstock becomes about 380°C that is a temperature at which a heat exchange rate of fluid reduces. In such a temperature, tar is produced in the double-pipe, and the inner pipe (low-temperature side flow channel 36) and the outer pipe (high-temperature side flow channel 37) are easily clogged. Thus, in order to avoid this, by providing the extracting position 33 and the return position 34 as stated above, production of tar can be suppressed and the piping can be prevented from being clogged, so that reliability of the gasification system 100 can be improved.

Further, since expensive and thick-walled piping is generally used for the heat exchanger 30 to resist a high-temperature and high-pressure condition, incidental expenses associated with maintenance of piping or the like can be suppressed by performing such a change of the flow channel that the medium-temperature zone 72 is omitted as stated above.

Further, the heating of the gasification feedstock that has been extracted from the heat exchanger 30 is performed by the preheater 40, and thus energy efficiency in the gasification system 100 can be enhanced. Further, new introduction of a heating facility is not necessary, and it is possible to prevent a cost from increasing.

In the example described above, the position in which the temperature of the gasification feedstock becomes about 370°C is referred to as the extracting position 33, and the position in which the temperature of the gasification feedstock becomes about 385°C is referred to as the return position 34. However, the extracting position 33 and the return position 34 are not limited to those positions. That is, the extracting position 33 may be a boundary part between the low-temperature zone 71 and the medium-temperature zone 72. Further, the return position 34 may be a boundary part between the medium-temperature zone 72 and the high-temperature zone 73.

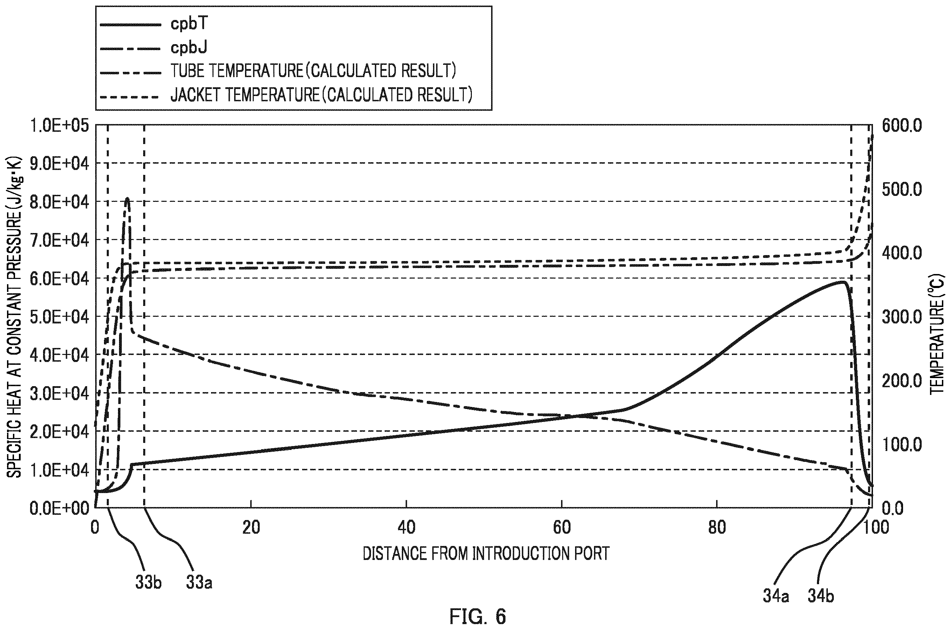

FIG. 6 is a diagram illustrating appropriate positions for the extracting position 33 and the return position 34 in the heat exchanger 30. As illustrated in FIG. 6, the extracting position 33 may be arranged somewhere at a position in which the specific heat at constant pressure is relatively high (for example, in a range indicated by a reference number 33a to a reference number 33b) near the point in which the specific heat at constant pressure of the gasification feedstock reaches a peak value at the closer side to the introduction port 31 (the point in which the temperature of the gasification feedstock becomes about 380°C). For example, the extracting position 33 is such a position that the specific heat at constant pressure becomes 10kJ/kg·K or greater.

On the other hand, the return position 34 may be arranged somewhere at a position in which the specific heat at constant pressure is relatively high (for example, in a range indicated by a reference number 34a to a reference number 34b) near the point in which the specific heat at constant pressure of the gasification feedstock reaches a peak value at the closer side to the discharge port 32 (the point in which the temperature of the gasification feedstock becomes about 380°C). For example, the return position is such a position that the specific heat at constant pressure becomes 10kJ/kg·K.

Note that, in the above description, the internal pressure of the heat exchanger 30 is assumed to be 25MPa. However, the internal pressure of the heat exchanger 30 may vary. If the internal pressure varies, a peak temperature of the specific heat at constant pressure also varies (see FIG. 4), and thus, when the internal pressure of the heat exchanger 30 varies, the extracting position 33 is preferably regulated in response thereto.

Next, how to determine the extracting position 33 in a case in which the internal pressure of the heat exchanger 30 varies will be described.

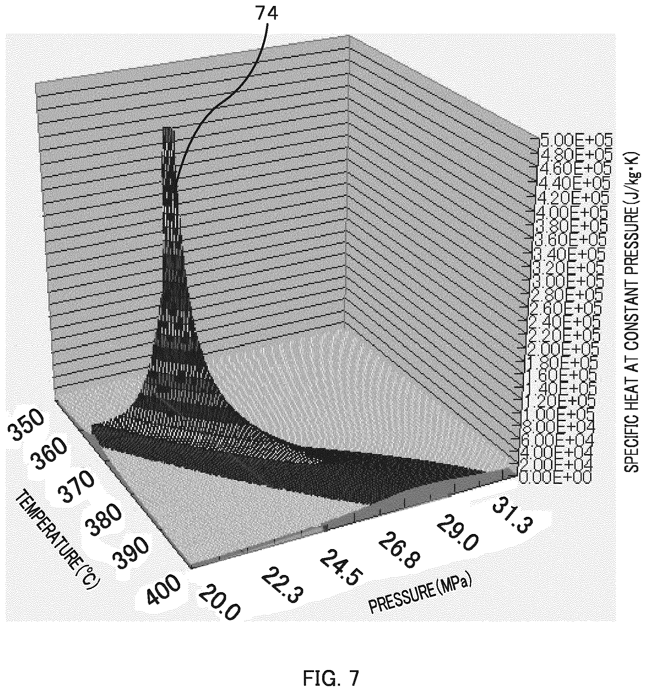

FIG. 7 is a diagram showing a relationship among temperature of water, pressure and specific heat at constant pressure, which is used for determining the extracting position 33. As illustrated in FIG. 7, a curved surface 74 indicates an aggregation of plots of temperature and pressure at which the specific heat at constant pressure exceeds a predetermined value. It is possible to determine an appropriate extracting position 33 by reading out, from the curved surface 74, a temperature corresponding to the current pressure of the heat exchanger 30.

As stated above, even when the internal pressure of the heat exchanger 30 varies, it is possible to enhance the heat exchange efficiency in the heat exchanger 30 by determining the extracting position 33 and the return position 34 on the basis of values of the specific heat at constant pressure.

As described above, according to the gasification system 100 of the present embodiment, the gasification feedstock introduced to the heat exchanger 30 is extracted in the middle of the low-temperature side flow channel 36, the extracted gasification feedstock is heated and returned in the middle of the low-temperature side flow channel 36, and thus, for example, it becomes possible to prevent the gasification feedstock from flowing through the point in which the heat exchange efficiency deteriorates. This can enhance the heat exchange efficiency in the heat exchanger 30. Further, the gasification feedstock is heated in the external heating means (preheater 40) which is provided outside the heat exchanger 30, and thus the gasification feedstock can be efficiently gasified. Moreover, new introduction of a heating facility is not necessary, and it is possible to prevent a cost from increasing.

Further, since the position where the extraction is performed (extracting position 33) is determined based on the specific heat at constant pressure, the heat exchange efficiency can be certainly enhanced by, for example, extracting the gasification feedstock from a position in which the specific heat at constant pressure is low in the heat exchanger 30.

Further, since the gasification feedstock is extracted from the boundary part between the low-temperature zone 71 and the medium-temperature zone 72, and the extracted gasification feedstock is returned to the boundary part between the medium-temperature zone 72 and the high-temperature zone 73, the temperature of the gasification feedstock can be certainly raised without allowing the gasification feedstock to flow through the medium-temperature zone 72 in which the heat exchange efficiency is low. This can perform gasification efficiently.

The above description of the embodiment is to facilitate understanding of the present invention, and does not limit the present invention. The present invention may be modified and improved without departing from the gist thereof, and the present invention includes equivalents thereof.

For example, the double-pipe heat exchanger has been adopted as the heat exchanger 30 in the present embodiment. However, other types of heat exchangers may be adopted, as long as the heat exchanger is a countercurrent system.

Further, in the present embodiment, a method of using the preheater 40 that is an existing facility is described as a means of heating the gasification feedstock that has been extracted from the extracting position 33. However, the gasification feedstock may be heated by newly providing an external heating means (a heater or the like).

### [Reference Signs List]

1 regulation tank, 2 crusher, 3 supply pump, 30 heat exchanger, 31 introduction port, 32 discharge port, 33 extracting position, 34 return position, 35 external heating means, 36 low-temperature side flow channel, 37 high-temperature side flow channel, 38 bypass piping, 39 surplus portion, 40 preheater, 50 gasification reactor, 51 cooler, 52 pressure reducer, 55 piping, 60 gas-liquid separator, 61 gas tank, 62 heater, 63 heater, 71 low-temperature zone, 72 medium-temperature zone, 73 high-temperature zone, 74 a curved surface, 100 gasification system

## Claims

1. A gasification system including
a countercurrent type heat exchanger configured to include a low-temperature side flow channel through which a gasification feedstock flows, and a high-temperature side flow channel to which treated water in a supercritical state is introduced, the treated water raising a temperature of the gasification feedstock by exchanging heat with the gasification feedstock,
a gasification reactor configured to gasify the gasification feedstock, whose temperature has been raised by the countercurrent type heat exchanger, by heating and pressurizing the gasification feedstock to be in a supercritical state, the gasification reactor being configured to discharge the gasification feedstock as treated water in the supercritical state, and
a treated water flow channel configured to introduce, to the countercurrent type heat exchanger, the treated water that has been discharged from the gasification reactor,
the gasification system comprising:
a feedstock introducing means configured to introduce the gasification feedstock to the low-temperature side flow channel; and
an external heating means configured to extract, from the middle of the low-temperature side flow channel, the gasification feedstock that has been introduced by the feedstock introducing means, heat the extracted gasification feedstock, and return the heated gasification feedstock to a middle position on a feedstock downstream side of a position in which the gasification feedstock has been extracted.

2. The gasification system according to claim 1, wherein
a position in which the extraction is performed is determined based on a value of specific heat at constant pressure of the gasification feedstock, and the gasification feedstock is extracted from the position that has been determined.

3. The gasification system according to any one of claims 1 or 2, wherein
specific heat at constant pressure of the water at the position in which the extraction is performed is 10kJ/kg·K or greater.

4. The gasification system according to any one of claims 1 to 3, wherein
the low-temperature side flow channel is configured to include a low-temperature zone in which a temperature of the gasification feedstock introduced by the gasification feedstock introducing means is raised, and a high-temperature zone in which a temperature of the gasification feedstock that has passed through the low-temperature zone is raised again, and
the external heating means extracts the gasification feedstock from a high temperature end of the low-temperature zone and returns the gasification feedstock to a low temperature end of the high-temperature zone.

5. The gasification system according to any one of claims 1 to 4, wherein
heating by the external heating means is performed in a preheater that preheats the gasification feedstock whose temperature has been raised by the countercurrent type heat exchanger.
